(19) Europäisches Patentamt
European Patent Office
Office européen des brevets

(11) **EP 3 250 964 B1**

(12) **EUROPEAN PATENT SPECIFICATION**

(45) Date of publication and mention
of the grant of the patent:
**18.11.2020 Bulletin 2020/47**

(51) Int Cl.:
*G03H 1/00* (2006.01)     *G03H 1/04* (2006.01)
*G03H 1/08* (2006.01)     *G01B 11/16* (2006.01)
*G01C 15/00* (2006.01)     *G01M 5/00* (2006.01)
*G01B 9/02* (2006.01)     *G01B 9/027* (2006.01)

(21) Application number: **16709577.7**

(22) Date of filing: **28.01.2016**

(86) International application number:
**PCT/IB2016/050423**

(87) International publication number:
**WO 2016/120815 (04.08.2016 Gazette 2016/31)**

(54) **METHOD AND SYSTEM FOR MONITORING A BUILDING STRUCTURE**

VERFAHREN UND SYSTEM ZUR ÜBERWACHUNG EINER GEBÄUDESTRUKTUR

PROCÉDÉ ET SYSTÈME DE SURVEILLANCE D'UNE STRUCTURE DE BÂTIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2015 IT MI20150111**
**31.07.2015 IT UB20152754**

(43) Date of publication of application:
**06.12.2017 Bulletin 2017/49**

(73) Proprietors:
• **Consiglio Nazionale Delle Ricerche - CNR**
**00185 Roma (IT)**
• **Universita' Degli Studi di Firenze**
**50121 Firenze (IT)**

(72) Inventors:
• **LOCATELLI, Massimiliano**
**00185 Roma (IT)**
• **POGGI, Pasquale**
**00185 Roma (IT)**
• **PUGLIESE, Eugenio**
**50121 Firenze (IT)**
• **LACANNA, Giorgio**
**50121 Firenze (IT)**

(74) Representative: **Pietra, Giulia et al**
**Marchi & Partners S.r.l.**
**Via Vittor Pisani, 13**
**20124 Milano (IT)**

(56) References cited:
**US-A- 5 671 042     US-A1- 2002 135 751**

• **ANNA PELAGOTTI ET AL: "Reliability of 3D Imaging by Digital Holography at Long IR Wavelength", JOURNAL OF DISPLAY TECHNOLOGY, IEEE SERVICE CENTER, NEW YORK, NY, US, vol. 6, no. 10, 1 October 2010 (2010-10-01), pages 465-471, XP011334417, ISSN: 1551-319X, DOI: 10.1109/JDT.2010.2041186**
• **A. PELAGOTTI ET AL: "An automatic method for assembling a large synthetic aperture digital hologram", OPTICS EXPRESS, vol. 20, no. 5, 27 February 2012 (2012-02-27), page 4830, XP055121806, ISSN: 1094-4087, DOI: 10.1364/OE.20.004830**
• **STOYKOVA E ET AL: "Visible reconstruction by a circular holographic display from digital holograms recorded under infrared illumination", OPTICS LETTERS, OPTICAL SOCIETY OF AMERICA, US, vol. 37, no. 15, 1 August 2012 (2012-08-01), pages 3120-3122, XP001577490, ISSN: 0146-9592, DOI: 10.1364/OL.37.003120 [retrieved on 2012-07-20]**
• **MARKOV V B ED - K ET AL: "Display and applied holography in museum practice", OPTICS AND LASER TECHNOLOGY, ELSEVIER SCIENCE PUBLISHERS BV., AMSTERDAM, NL, vol. 28, no. 4, 1 June 1996 (1996-06-01), pages 319-325, XP004026123, ISSN: 0030-3992, DOI: 10.1016/0030-3992(95)00104-2**

- M. Locatelli ET AL: "Imaging live humans through smoke and flames using far-infrared digital holography", OPTICS EXPRESS, 26 February 2013 (2013-02-26), pages 5379-5390, XP055564943, Retrieved from the Internet: URL:https://www.osapublishing.org/DirectPDFAccess/34739BF1-C5E0-3FD2-8D345EEBFF5648D 3_249517/oe-21-5-5379.pdf?da=1&id=249517&seq=0&mobile=no [retrieved on 2019-03-06]

- "Holographic interferometry", Wikipedia , 11 June 2014 (2014-06-11), Retrieved from the Internet: URL:https://en.wikipedia.org/w/index.php?title=Holographic_interferometry&oldid=612536437 [retrieved on 2019-03-05]

**Description**

The present invention relates in general to the monitoring of building structures, for example in connection with assessment of seismic or hydro-geological risk, or in connection with the protection of fine arts. In particular, the present invention relates to a method and a system for monitoring deformations and/or displacements of a building structure.

In the present description and the claims, the expression "building structure" will indicate a manufactured object or structure having dimensions of the order of magnitude of 1 m or more (up to several tens of metres) intended for any area in the civil engineering field (construction, geotechnical, infrastructural, hydraulic, electrical, structural or town planning areas) such as a civil or industrial building, a bridge or viaduct, a tunnel, a barricade, a dam, a dike, an aqueduct, a sewer, a canal, a pylon, a wind turbine or an electricity pylon.

Monitoring of the deformations or displacements of a building structure is useful in various areas, for example the assessment of seismic or hydro-geological risk, civil protection or the protection of fine arts. By monitoring the displacements (for example oscillations, in terms of amplitude and frequency) of a building, for example, it is possible to assess the characteristics and any structural defects of the building or evaluate the response of the building to environmental factors (earthquakes, wind, rain and other natural phenomena) or anthropogenic factors (motor vehicle or railway traffic, underground works, etc.).

At present, monitoring of the deformations or displacements of a building structure typically is performed by means of suitable sensors (seismometers) which are arranged in different points of the structure and/or on its surface.

Although seismometers per se ensure accurate results, they have a number of drawbacks.

Firstly, access to the structure for positioning of the seismometers may be difficult, in particular in the case where the structure is damaged or is subject to particular regulations which limit access thereto (for example in the case of a building of artistic or historical interest). Moreover, each seismometer provides data relating to the movement (in particular the acceleration along the three axes) of the single point of the structure in which it is situated. Therefore, if it is desired to monitor the structure overall, it is required to provide a plurality of seismometers positioned on suitable points of the structure. Moreover, the current seismometers are able to detect periodic deformations or displacements (i.e. oscillations) with a frequency greater than a certain minimum frequency, but instead do not allow the detection of other types of deformations or displacements of the structure, for example non-periodic displacements due to structural failures which occur over time periods which may also be relatively long (hours or days).

US 2002/135751 describes a process for recording the deformation of objects. During the deformation of the object a sequence or series of images of the object is recorded with a measuring process. The differential between two sequential images is formed. These differentials are integrated.

A. Pelagotti et al: "Reliability of 3D Imaging by Digital Holography at Long IR Wavelength", Journal of Display Technology (Volume: 6, Issue: 10, Oct. 2010), pages 465-471 discloses that Digital Holography (DH) in the infrared (IR) range presents some peculiar aspects compared with the more common DH in the visible range. The current major drawback is due to the size of the pixel pitch of presently available thermal cameras, which is rather large compared to what would be optimal, and what is possible with analog films. However, since the CO2 laser wavelength is 15 times longer than average visible wavelength, a much higher stability, a wider view angle, and shorter acquisition distances are achievable, allowing easier acquisition of large object holograms.

An object of the present invention is therefore to provide a method and a system for monitoring a building structure which solves at least one of the aforementioned problems.

In particular, an object of the present invention is to provide a method and a system for monitoring a building structure which allow the structure to be monitored remotely (namely without requiring the installation or location of any sensor inside the structure or on its surface) and/or which allow the monitoring of any point of the structure (or the structure as a whole) and/or which are able to detect periodic deformations or displacements (oscillations) with an arbitrarily low frequency, and also deformations or displacements of the structure which are not periodic and which occur over time periods which may also be relatively long (hours or days).

According to embodiments of the present invention, these objects and others are achieved by a method and a system which perform the monitoring of the building structure by means of digital holography technique. In particular, by means of digital holography a sequence of phase images of the structure is reconstructed in real time and these images undergo suitable numerical processing in order to reconstruct the evolution in time of deformations or displacements of the structure.

The accuracy of reconstruction is equal to about one hundredth of the wavelength used. According to preferred embodiments of the invention, the wavelength used is in the middle infrared range, for example 10.6 $\mu$m. This wavelength range is particularly advantageous compared to other ranges (for example the visible spectrum) since on the one hand it allows a visual field to be obtained which is sufficiently broad to contain a significant portion of the structure (if not the entire structure) and on the other hand it allows a reduction of the sensitivity to environmental vibrations to a level such that measurement may be performed.

The monitoring method and system according to the present invention therefore allows monitoring the building structure, potentially as a whole, remotely, without having to arrange any sensor inside or on the external surface of the structure. The monitoring time and costs are therefore reduced significantly compared to the known techniques which use seismometers.

Moreover, the monitoring method and system according to the present invention are able to detect not only periodic deformations and/or displacements (oscillations) with an arbitrarily low frequency, but also non-periodic deformations and/or displacements of the structure which occur over time periods which may also be relatively long (hours or days).

According to a first aspect a system for monitoring a deformation and/or a displacement of a building structure by means of digital holography is provided, the system comprising:

- a laser source suitable for emitting an infrared radiation;
- an interferometric arrangement configured to divide the infrared radiation into an object beam configured to irradiate at least one portion of the structure and to be scattered by the at least one portion of the structure, and a reference beam configured to interfere with the object beam scattered by the at least one portion of the structure so as to create at least one hologram of the at least one portion of the structure;
- a sensor configured to detect a time sequence of holograms of the at least one portion of the structure; and
- a processing unit configured to reconstruct an evolution in time of the deformation and/or the displacement of the at least one portion of the structure by numerically processing the time sequence of holograms of the at least one portion of the structure.

Preferably the infrared radiation has a wavelength of between 3 $\mu$m and 30 $\mu$m.

Preferably, the interferometric arrangement comprises a first lens suitable for enlarging the object beam before it irradiates the at least one portion of the building structure and a second lens suitable for enlarging the reference beam before it interferes with the object beam scattered by the at least one portion of the building structure.

Preferably, the interferometric arrangement further comprises a mirror suitable for deflecting the object beam before it irradiates the at least one portion of the building structure, the mirror being movable so as to adjust a direction of incidence of the object beam on the structure portion.

Preferably, the processing unit is configured to:

- process the time sequence of holograms of the at least one portion of the structure so as to provide a sequence of phase images of the at least one portion of the structure; and
- calculate a displacement over time of at least one point of the at least one portion of the structure represented by a certain pixel in the sequence of phase images of the at least one portion of the structure, as a function of phase differences of the pixel between consecutive phase images of the sequence of phase images of the at least one portion of the structure.

Preferably, the processing unit is configured to calculate the displacement over time of the at least one point of the at least one portion of the structure along a direction N, perpendicular to the surface surrounding the at least one point of the at least one portion of the structure, taking into account the inclination of the direction of incidence of the object beam on the at least one portion of the structure relative to the direction N.

Preferably, the processing unit is further configured to process the sequence of holograms of the at least one portion of the structure so as to provide a sequence of amplitude images of the at least one portion of the structure.

According to a second aspect a method for monitoring a deformation and/or a displacement of a building structure by means of digital holography is provided, the method comprising:

- providing an infrared radiation;
- dividing the infrared radiation into an object beam and a reference beam, irradiating at least one portion of the building structure with the object beam so that the object beam is scattered by the at least one portion of the building structure, and making the reference beam interfere with the object beam scattered by the at least one portion of the building structure so as to create at least one hologram of the at least one portion of the structure;
- detecting a time sequence of holograms of the at least one portion of the building structure; and
- reconstructing an evolution in time of the deformation and/or the displacement of the at least one portion of the structure by numerically processing the time sequence of holograms of the at least one portion of the structure.

The present invention will be illustrated in greater detail by means of the attached drawings which are provided by way of a non-limiting example and in which:

- Figure 1 shows in schematic form a system for monitoring a building structure according to an embodiment of the present invention;

- Figure 1a shows in schematic form the building structure irradiated by a beam emitted by the system according to Figure 1;
- Figure 2 is a flow diagram of operation of the system according to Figure 1;
- Figures 3a and 3b show in schematic form a portion of the system according to Figure 1; and
- Figure 4 shows in graphic form the results of a comparative test performed by the inventors.

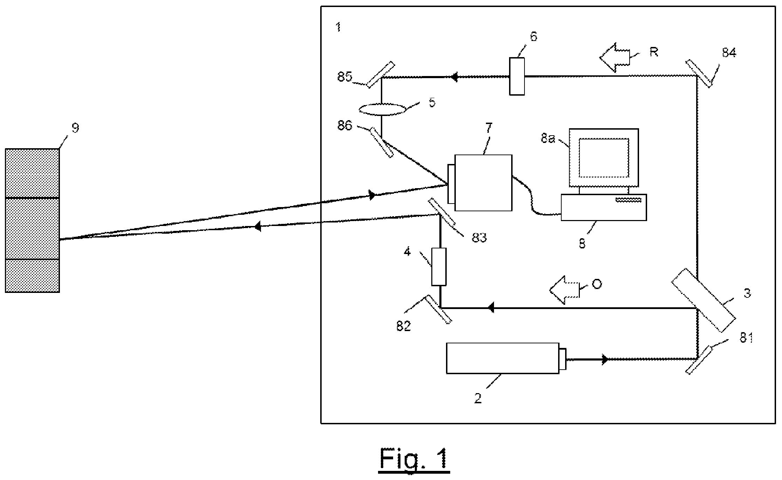

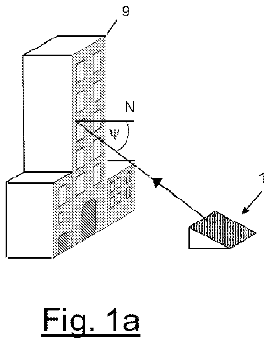

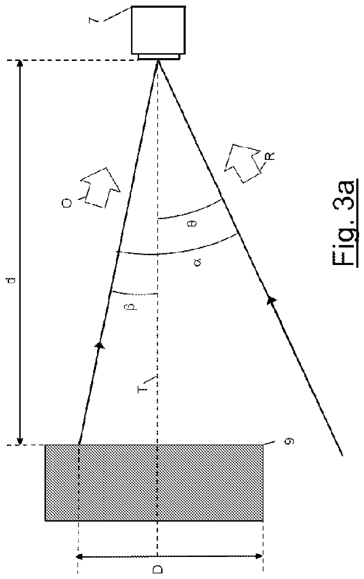

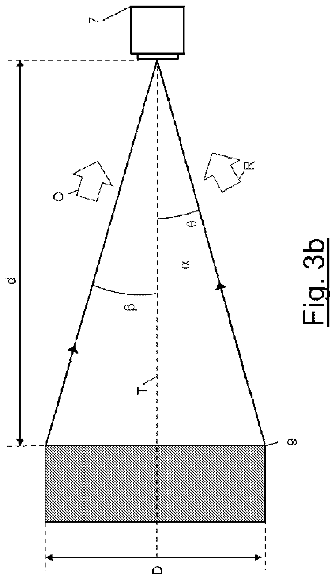

Figures 1, 1a, 3a and 3b are schematic representations, not to scale, which do not reproduce the preferred distance and angle values shown in them. Quantitative evaluations of distances and angles of the system schematically shown in Figures 1, 1a, 3a and 3b are indicated in the continuation of the present description.

Figure 1 shows a system 1 for monitoring a building structure 9 (a building by way of a non-limiting example) according to an embodiment of the present invention. Figure 1a shows in schematic form the building structure 9, irradiated by a beam emitted by the system 1.

The system 1 preferably comprises a laser source 2, a beam splitter 3, a first lens 4, a second lens 5, a variable attenuator 6 and an infrared sensor 7.

The laser source 2 is preferably suitable for emitting radiation in the infrared range. In particular, the emission wavelength of the laser source 2 is preferably in the so-called "middle infrared range" or "long wavelength or far infrared range" which conventionally ranges from 3 $\mu$m to 30 $\mu$m. More preferably, the emission wavelength of the laser source 2 ranges between 8 $\mu$m and 12 $\mu$m. The choice of the preferred range for the emission wavelength of the laser source 2 is preferably dependent on the following criteria: wavelengths of the infrared sources typically available, spectral response of the sensors in the infrared range which are typically available, atmospheric absorption spectrum in the infrared range, sensitivity of the system 1 to the environmental vibrations and of the system itself (which decrease with an increase in the wavelength and assumes a value suited to the application of the system 1 for wavelengths in the middle infrared range) and desired dimension of the visual field (which increases with an increase in the wavelength, as will be discussed in greater detail hereinbelow).

The laser source 2 is preferably a continuous source. Alternatively, a pulsed laser source may be used.

Preferably, the minimum emission power of the laser source 2 is 30 W, more preferably 40 W, and even more preferably 60 W. The preferred range for the emission power of the laser source 2 depends mainly on the distance d between the portion of the building 9 which is to be monitored and the surface area of the sensor 7, the maximum dimension of the portion of the building 9 which is to be monitored and the detection sensitivity of the sensor 7. Assuming that it is wished to irradiate a portion of the building 9 (ignoring the air absorption factor), the inventors have estimated that, if the distance d increases by a factor n, the emission power of the laser source must be increased by a factor $n^2$ in order for the same signal level to be maintained on the sensor. The inventors have established that, in order to monitor a portion of a building with an area of about $4m^2$ situated at a distance d of about 18 m from the surface of the sensor 7, an emission power of about 60 W is sufficient. On the other hand, the emission power of the laser source 2 is preferably such that the energy density on the portion of the surface of the building 9 irradiated does not exceed a threshold beyond which it may damage the surface of the building 9.

Moreover, the radiation emitted by the laser source 2 is preferably linearly polarized. The inventors have carried out a number of positive tests using a $CO_2$ RF laser source made by Universal Laser Systems (Scottsdale, Arizona, USA) suitable for emitting a linearly polarized radiation with an emission wavelength of 10.6 $\mu$m and a maximum emission power of 60 W.

The beam splitter 3 is suitable for dividing the light radiation emitted by the laser source 2 into a first light beam (below called "object beam O") and a second light beam (below called "reference beam R"). The beam splitter 3 is preferably configured so that the object beam O scattered by the surface of the building 9 and the reference beam R are received by the sensor 7 with comparable intensities (the variable attenuator 6 is also intended for this purpose, as will be discussed in greater detail hereinbelow). More particularly, the beam splitter 3 is configured so that the power of the object beam O is at least 80% of the total power incident on the beam splitter 3, for example 90% of the total power incident on the beam splitter 3. In the system 1 shown in Figure 1, the reflected portion of the radiation incident on the beam splitter 3 forms the object beam O, while the transmitted portion forms the reference beam R. This however is not limiting and, according to other embodiments not shown in the drawings, the object beam O and the reference beam R may correspond respectively to the transmitted portion and to the reflected portion of the radiation incident on the beam splitter 3 (arranged so as to maintain the aforementioned proportions between power of the object beam O and power of the reference beam R).

The first lens 4 is preferably arranged on the optical path of the object beam O. The first lens 4 is preferably suitable for increasing the size of the object beam O so as to irradiate a sufficiently broad portion of the building 9. The first lens 4 may have different forms (flat-convex, biconvex, meniscus, etc.). Preferably, the first lens 4 is a diverging lens. Alternatively, the first lens 4 may be a converging lens, which first focuses and then enlarges the object beam O. Alternatively, instead of using a single lens 4, in order to increase the size of the object beam O, it is possible to use a lens system, comprising two or more lenses, so as to be able to vary as required the size of the object beam at a certain distance and irradiate effectively more or less broad portions of the building 9. The inventors carried out positive tests using two converging biconvex lenses which advantageously allowed the size of the object beam O to be adjusted within a significantly broad range.

The second lens 5 is preferably arranged along the optical path of the reference beam R. The second leans 5 is preferably suitable for increasing the size of the reference beam R. The second lens 5 may have different forms (flat-convex, biconvex, meniscus, etc.). and may comprise a converging lens or a diverging lens. Preferably, the second lens 5 is a diverging lens. Alternatively, the second lens 5 is a converging lens, which first focuses and then enlarges the reference beam R.

The variable attenuator 6 is preferably arranged along the optical path of the reference beam R, more preferably between the beam splitter 3 and the second lens 5. The variable attenuator 6 is suitable for adjusting the power of the reference beam R so as to optimize the visibility of the interference pattern of reference beam R and object beam O, as will be described in greater detail hereinbelow. According to alternative variants, the variable attenuator 6 is replaced by a polarizer, which allows the same degree of attenuation of the reference beam R to be obtained.

The sensor 7 is preferably arranged so as to detect the interference pattern of object beam O and reference beam R. The sensor 7 is preferably a thermal camera comprising a bidimensional matrix of NxM elements or pixels. The inventors carried out positive tests using the microbolometer camera 307 K (matrix of 640x480 of A-Si pixels) made by Thermoteknix Miricle (UK), with an acquisition frequency of 25 photograms/sec, a pixel size of 25 $\mu$m×25 $\mu$m and a spectral response of between 8 $\mu$m and 12 $\mu$m.

The system 1 may further comprise one or more mirrors suitable for defining the optical path of the object beam O and/or the reference beam R.

In the embodiment shown in Figure 1, by way of a non-limiting example, the system 1 comprises a first mirror 81 arranged between the laser source 2 and the beam splitter 3, a second mirror 82 arranged between the beam splitter 3 and the first lens 4, and a third mirror 83 arranged between the first lens 4 and the building 9. The third mirror 83 can be preferably moved by means of actuators (not shown in the figure for simpler illustration) so as to be able to modify remotely the direction of the object beam O emitted by the system 1. In particular, the actuators of the movable mirror 83 may be used to direct the object beam O onto the portion of the building 9 to be explored. The first lens 4, being positioned upstream of the movable mirror 83, advantageously does not hinder the adjustment of the direction of the object beam O.

Moreover, in the embodiment shown in Figure 1, by way of a non-limiting example, the system 1 also comprises a fourth mirror 84 arranged between the beam splitter 3 and the variable attenuator 6, a second mirror 85 arranged between the variable attenuator 6 and the second lens 5, and a sixth mirror 86 arranged between the second lens 5 and the sensor 7, said mirrors deflecting the reference beam R onto the sensor 7 so as to direct the reference beam with the correct angle of incidence θ.

The system 1 may comprise other optional elements arranged along the optical path of the object beam O and/or the reference beam R.

For example, according to a variant not shown in the drawings, the system 1 also comprises one or more cylindrical lenses arranged along the optical path of the object beam O. The cylindrical lens gives the object beam an elongated form (or an elliptical form) which is particularly useful in the case where the building 9 also has an elongated form (heightwise or widthwise).

According to other variants not shown in the drawings, the system 1 may comprise other optical elements, such as polarizers, Brewster windows, etc.

In any case, the beam splitter 3, the lenses 4 and 5 and the variable attenuator 6 form an interferometric arrangement of the "off-axis" and "lensless" type, namely an interferometric arrangement in which two interfering beams (namely the object beam O and the reference beam R) are inclined relative to each other by an angle other than zero when they strike the surface of the sensor 7 (off-axis) and in which there is not optical system present for the formation of images in front of the sensor 7 (lensless).

The system 1 further comprises a processing unit 8 cooperating with the sensor 7. The processing unit 8 is preferably configured to receive from the sensor 7 the interference patterns or holograms detected in a discretized form, store them and process them, as will be discussed in detail hereinbelow. The processing unit 8 is moreover preferably provided with a screen 8a for displaying the results of processing.

The system 1 may be implemented as a portable apparatus, which may be transported and arranged in the vicinity of the building structure to be monitored, as shown schematically in Figure 1a. In particular, the system 1 (except for the processing unit 8) is preferably mounted on a platform which can be oriented in a horizontal and vertical direction. For example, the various components of the system 1 (except for the processing unit 8) may be mounted on a plate with portable dimensions. The inventors carried out positive tests using a plate with dimensions 90 cm x 60 cm.

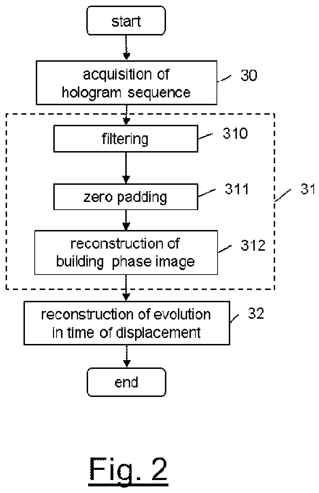

Operation of the system 1 will now be described with reference to the flow chart of Figure 2.

During a first acquisition step 30, the system 1 is brought into the vicinity of the building 9 to be monitored. The distance d between the system 1 and the portion of the building 9 which is to be monitored depends on the environmental conditions (accessibility of the ground surrounding the building), on any safety measurements (if the building 9 is unstable, access beyond a certain point will not be allowed) and on the dimensions of the portion of the building which is to be monitored (the linear visual field of the system 1, as will be discussed in greater detail below, increases with an increase in the distance d). The system 1 is then oriented, by means of the adjustable platform, so that the portion of the building 9 which is to be monitored falls within the visual field of the system 1). Then the direction of the object beam O emitted by the system 1 is preferably adjusted (by means of the actuators of the mirror 83) so as to select a specific portion of the building 9 inside the visual field. The direction of the object beam O (called below also "irradiation direction") therefore forms, relative to the direction N perpendicular to the surface of the building 9 about the measurement point, an angle $\psi$ (see Figure 1a).

Then, the laser source 2 is switched on and starts to emit infrared radiation. The infrared radiation is divided into an object beam O and a reference beam R by the beam splitter 3.

The object beam O is enlarged by the first lens 4 and irradiates the surface (or a portion of the surface) of the building 9. The extension of the irradiated surface depends on the distance d between the system 1 and the portion of the building 9 which is to be monitored and the lens 4 or configuration of lenses used to expand the object beam O. The object beam O is scattered by the irradiated surface of the building 9 and then reaches the sensor 7.

On the other hand, the reference beam R - after being attenuated by the variable attenuator 6 - is enlarged by the second lens 5 and directed onto the sensor 7. The reference beam R reaches the sensor 7 with a low intensity and an approximately spherical wave front, the radius of curvature of which depends on the focal length of the lens 5 and the distance of the lens 5 from the sensor. The focal length and the position of the second lens 5 are preferably selected so that the reference beam R irradiates, in a substantially uniform manner, the entire surface of the sensor 7.

Therefore, the object beam O scattered by the building 9 and the reference beam R interfere with each other on the surface of the sensor 7, thus creating an interference pattern or hologram, which is detected by the sensor 7.

Preferably, during step 30, the sensor 7 acquires a time sequence of holograms. The hologram sequence is preferably acquired at the acquisition frequency of the sensor 7. If, for example, the acquisition frequency of the sensor 7 is 25 photograms/s, 25 holograms per second are acquired. The acquisition of a holograms sequence allows reconstruction of an evolution over time of the deformations or displacements of the illuminated portion of the building 9, as will be discussed in greater detail hereinbelow.

Each hologram acquired has interference fringes with a certain fringe spacing. Each hologram may be described in terms of the bidimensional intensity distribution according to the following equation:

$$H(x,y)=|R|^2+|O|^2+R^*{\cdot}O+R{\cdot}O^* \qquad\qquad [1]$$

where x and y are the two orthogonal coordinates of the surface of the sensor 7, while $R^*$ and $O^*$ are the complex conjugates of the reference beam R and the object beam O, respectively.

Preferably, during step 30, the variable attenuator 6 is adjusted so that, on the surface of the sensor 7, the power of the reference beam R is substantially equal to the power of the object beam O scattered by the building 9. This allows the visibility of the hologram interference fringes to be maximized.

Since, owing to the use of infrared radiation, the system 1 has a low sensitivity to vibrations, during the course of step 30 advantageously anti-vibration measures are not required. Moreover, since the sensor 7 is sensitive only to the infrared radiation, the visible components of the artificial light and the sunlight do not disturb the operation of the system 1 during the acquisition step 30. Likewise the infrared components of artificial light and sunlight do not disturb the operation of the system 1, because they are incoherent with respect to the object beam O and the reference beam R and therefore represent only a background noise.

The sequence of holograms acquired by the sensor 7 during the step 30 is then stored by the processing unit 8.

The processing unit 8 then preferably carries out a numerical processing step 31 on the hologram sequence acquired. The numerical processing step 31 may be carried out at the end of the step 30, namely at the end of acquisition of the entire sequence of holograms. Alternatively, since each hologram in the sequence undergoes singly numerical processing, the step 31 may start immediately after acquisition of the first hologram in the sequence and then continue in parallel with acquisition of the successive holograms.

The numerical processing which the processing unit 8 performs on each hologram acquired preferably comprises a first sub-step 310, during which the hologram is filtered so as to cancel the zero diffraction order, namely the term $|R|^2+|O|^2$ of the equation [1]. Since the system 1 has an off-axis configuration (namely the object beam O scattered by each point of the building portion 9 irradiated and the reference beam R strike the sensor 7 with different angles), the term $|R|^2+|O|^2$ is advantageously not spatially superimposed on the other terms $R^*{\cdot}O+R{\cdot}O^*$ and consequently may be filtered in the domain of the spatial frequencies.

Then, during a second sub-step 311, the hologram preferably undergoes a "zero padding" operation. This operation envisages extending the matrix of NxM pixels of the discretized and filtered hologram, introducing along its edges a number of additional fictitious pixels, the intensity of which is set to zero. Preferably this operation is carried out as described in EP 1 654 596.

As is known from the theory of digital holography, in order to reconstruct the amplitude or phase image of an object on the basis of its acquired hologram, a mathematical algorithm which implements the known Rayleigh-Sommerfeld formula is carried out. This formula substantially contains a double integration of the digitalized hologram multiplied by a numerical copy of the reference beam R and other terms. The resultant integral may be converted into Fourier transforms with a consequent reduction in the computational effort. Since the hologram is in a discretized form, the Fourier transforms are also discrete and may therefore be calculated in a relatively simple manner by means of known FFT (Fast Fourier Transform) algorithms. In order to perform the transformation, in particular, two methods are known: the convolution method and the Fresnel method. Using for example the Fresnel method, the spatial resolution of the reconstructed phase image is quantified by the so-called "reconstructed pixel", the dimensions of which along the x and y axes are defined by the following equations:

$$\Delta\xi = \frac{\lambda \cdot d}{N \cdot \Delta x} \qquad \Delta\eta = \frac{\lambda \cdot d}{M \cdot \Delta y} \qquad\qquad [2]$$

where N and M are the numbers of pixels of the sensor 7 along the x and y axes (and, therefore, of the discretized hologram), $\lambda$ is the emission wavelength of the laser source 2, d is the reconstruction distance (namely the distance between the explored portion of the building 9 and the sensor 7), and $\Delta x$ and $\Delta y$ are the dimensions of each pixel of the sensor 7 along the x and y axes. From the equation [2] it is clear that $\Delta\xi$ and $\Delta\eta$ are proportional to the wavelength $\lambda$ and to the reconstruction distance d, while they diminish with an increase in the total number of pixels NxM and an increase in the physical dimensions of the pixels. The spatial resolution of the reconstructed image may therefore be worse than that obtained when working at the minimum distance permitted by the sampling theory.

The aforementioned "zero padding" operation advantageously allows the spatial resolution of the reconstructed phase image to be increased. More specifically, by adding fictitious pixels with zero intensity to the matrix NxM of the hologram acquired, $\Delta\xi$ and $\Delta\eta$ are decreased and the spatial resolution is thus increased. Preferably, the fictitious pixels are added along the edges of the hologram acquired, so as not to be mixed with the real pixels. This ensures that the reconstructed phase image does not have spurious frequencies resulting from discontinuities introduced between the real pixels. The number of fictitious pixels added depends on the resolution which is to be obtained for the reconstructed phase image. The maximum resolution which can be obtained in each case is limited by the diffraction limit.

Although the "zero padding" operation has been described hereinabove with reference to the Fresnel method alone, it may be used in combination with other methods, such as the angular spectrum method or the convolution method.

Then, during a third sub-step 312, the discretized hologram (filtered and optionally "enlarged" by fictitious pixels) is processed so as to reconstruct a phase image of the portion of the building 9 irradiated by the laser.

For this purpose, the processing unit 8 preferably carries out firstly numerical focussing of the hologram, which involves the application to the discretized hologram (filtered and if necessary "enlarged" by fictitious pixels) of a mathematical algorithm which implements the aforementioned Rayleigh-Sommerfeld formula, which substantially simulates the diffractive effects of the propagation of a numerical copy of the reference beam R through the hologram. The application of this algorithm gives, as a result, the reconstruction of the wave front of the object beam O, focussed at a distance d. Preferably, the algorithm is based on the aforementioned Fresnel method which is particularly simple and quick compared to other known methods. However, according to other variants, it is possible to use other focussing methods, for example the angular spectrum method or the convolution method.

The numerical focussing carried out in the sub-step 312 provides a reconstructed complex field, namely a matrix in which each element or pixel is a complex number. From this matrix, in the sub-step 312 the processing unit 8 preferably derives directly the phase image of the portion of the building 9 irradiated by the laser as a phase of the reconstructed complex field. In particular, the processing unit 8 preferably calculates the phase of each complex number of the matrix, thus obtaining a corresponding matrix in which each element or pixel is a phase. The matrix thus obtained contains the phase image of the portion of the building 9 irradiated by the laser 9 at a given moment.

The sub-step 312 preferably also comprises the operation of filtering the complex conjugate of the reconstructed complex field.

As mentioned above, the numerical processing 31 is applied to all the holograms of the sequence acquired during step 30. The execution of the numerical processing described above on each hologram of the sequence therefore produces a sequence of phase images of the portion of the building 9 irradiated by the laser.

Then, during a following step 32, the processing unit 8 preferably uses the sequence of phase images of the portion of the building 9 irradiated by the laser in order to reconstruct the evolution in time of the deformations or displacements of the portion of the building 9 irradiated by the laser. For this purpose, during the step 32, the processing unit 8 preferably uses all the phase images of the sequence.

In particular, during step 32, the displacement, along the perpendicular N to the building 9, of each point of the building 9 irradiated by the laser and represented by a given pixel of the phase image is preferably calculated as a function of the difference between the phase of that pixel in a certain phase image and the phase of the same pixel in the preceding phase image in the sequence. By carrying out phase differences of a certain pixel between successive phase images, it is possible to reconstruct the displacement, along the perpendicular N, of the point of the building represented by that pixel, with variation in time, according to the equation:

$$\Delta S_N = (1/k)\,(\lambda \cdot \Delta\varphi)/(4\pi n) = S_m/(2k), \qquad\qquad [3]$$

where $\Delta S_N$ is the displacement of the point corresponding to the pixel, along the perpendicular N to the surface surrounding the said point, between two successive phase images, $S_m$ is the variation in the source/building/sensor optical path, $\Delta\varphi$ is the phase difference of the pixel between two successive phase images, $\lambda$ is the wavelength used, n is the refractive index of the air, k is a projection factor which depends on the inclination of the irradiation direction (namely the direction of the object beam O incident on the point examined) relative to the perpendicular N and is equal to $\cos\psi$, where $\psi$ is the angle through which the irradiation direction is rotated in order to superimpose it on the perpendicular N. For displacements of 10 $\mu$m and for angles $\psi$ less than 8°, the correction by the factor k is less than the sensitivity of the interferometric technique (estimated at 0.1 $\mu$m). The equation [3] is valid only in the approximation where the positions of the mirror 83 and the sensor 7 are considered to coincide and, therefore, the irradiation direction coincides substantially with the direction of the line joining the sensor 7 to the pixel being examined.

By repeating the operation on a set of adjacent pixels (or on all the pixels of the phase image) - which represent at least a portion of the surface of the building 9 - it is therefore possible to reconstruct the displacement along the perpendicular N of each point of the portion of the building 9 represented by the pixels considered, namely the deformation or displacement of this portion of the building 9 as a whole. If the noise signal ratio of the single pixel is not sufficiently significant, optionally the phase variation is averaged over a greater number of adjacent pixels.

Optionally, for at least one of the holograms of the sequence acquired, the processing unit 8 also calculates the amplitude of the reconstructed complex field of the object beam O, calculating separately the modulus of the complex value of each pixel of the matrix which represents the field. This also allows the reconstruction of an amplitude image (namely a proper image) of the building 9. This amplitude image may be advantageously used during the course of the step 30 in order to select the building portion 9, the deformations or displacements of which are to be assessed. Once the pixels which represent the portion of interest on the amplitude image have been selected, the processing unit 8 preferably selects the corresponding pixels in the phase image and merely reconstructs the displacement along the perpendicular N of these pixels on the basis of their values in the various phase images of the sequence.

Optionally, step 32 may also comprise a Fourier analysis of the progression over time of the variation of the optical path $S_m$ for one or more points of the building 9 represented by the corresponding pixels of the phase image. Optionally the step 32 may comprise also the carrying out of a frequency filtering (passband filter) operation in order to exclude any frequency components which can be attributed to vibrations of the measurement system itself. This allows, in any case, the frequencies of the oscillations of the building 9 to be directly calculated. Optionally, the step 32 may also comprises the carrying out of a frequency filtering (passband filter) operation in order to select a single frequency of interest and calculate the amplitude of the relative displacement at the selected frequency.

The results obtained in step 32 are then stored and may be displayed on the screen 8a of the processing unit 8, for example in graphical form.

The system 1 therefore uses digital holography in order to monitor deformations and displacements of the building 9 or portions thereof. The use of digital holography offers various advantages.

Firstly, digital holography is an optical approach which allows remote monitoring of the building. The system 1 is in fact positioned at a certain distance from the building which, as mentioned above, may be adapted depending on the accessibility and the conditions of the area surrounding the building. It is not required to use sensors or devices which need to be positioned inside the building. The system 1 therefore allows easy and safe monitoring of building structures which have limited access for safety reasons or because they are buildings of artistic or historical interest.

Moreover, owing to the use of digital holography, the system 1 may monitor the building in a substantially continuous manner from both the spatial and time point of view. From a spatial point of view, with digital holography in fact it is possible to monitor the displacements of any point of the building, provided that it is illuminated by the object beam. The spatial resolution of monitoring (namely the number and the density of the points of the building which can be monitored separately) is determined substantially by the resolution of the phase images reconstructed by the system 1 (namely by the dimensions of the reconstructed pixels, as discussed above). From a time point of view, the system 1 allows assessment of the displacements of a pixel-point of the building with variation in time in a substantially continuous manner. The temporal resolution of monitoring (namely the time interval occuring between two consecutive monitoring operations of the phase of a same pixel) is substantially determined by the acquisition frequency of the sensor 7.

Moreover, the system 1 is able to monitor the building in real time. The numerical processing carried out by the processing unit 8 is in fact relatively simple and may be performed for each hologram of the sequence acquired substantially during the time interval occurring between the acquisition of two successive holograms. The displacement of each point may therefore be reconstructed substantially in real time, namely while the deformation or displacement to be detected is occurring.

The use of digital holography, and in particular digital holography in the middle infrared range, also offers other advantages.

Firstly, owing to the use of relatively long emission wavelengths, it is possible to reconstruct phase images of large objects such as buildings or other building structures, as will be discussed in greater detail hereinbelow.

Moreover, $CO_2$ laser sources in the middle infrared range generally have good spatial and temporal coherence properties. As a result it is possible to expand significantly the object beam derived from them so as to be able to illuminate significant portions of a building and obtain at the same time clearly visible interference fringes, also in the event of a significant imbalance between the optical path length of the object beam and that of the reference beam.

As regards the maximum size of the buildings which may be monitored with the system 1, an object (for example the building 9) illuminated by the object beam O scatters the light in different directions, and the fractions scattered by the various points of its surface and striking the surface of the sensor 7 form different angles $\alpha$ with the direction of incidence on the sensor of the reference beam R. Each angle $\alpha$ is equal to $\theta+\beta$, where $\theta$ is the angle formed by the direction of the reference beam R and the direction T perpendicular to the surface of the sensor 7 and $\beta$ is the angle formed by the direction of the fraction of the object beam O (see Figure 3a) with the perpendicular to the sensor T. The greater is the size of the building portion irradiated, the greater is the range of angles $\alpha$ which the object beam O forms with the reference beam R. With an increase in the angle $\alpha$, however, the spacing P of the interference fringes in the hologram diminishes in accordance with the following equation:

$$P = \frac{\lambda}{2\sin(\alpha/2)}, \qquad\qquad [4]$$

where $\lambda$ is the emission wavelength of the laser source 2. The equation [4] is applied in the case where $\theta$ is approximately equal to $\beta$. In order for the Whittaker-Shannon sampling theorem to be satisfied, $P \geq 2d_P$, where $d_P$ is the size of a single pixel of the sensor 7. Therefore, the maximum value of $\alpha$ which allows detection of the interference fringes of the hologram is:

$$\alpha_{max} = 2\sin^{-1}\left(\frac{\lambda}{4d_P}\right) \approx \frac{\lambda}{2d_P} . \qquad\qquad [5]$$

The latter equality is valid in small angle conditions.

On the other hand, the maximum angle $\beta_{max}$ formed by the object beam O and by the perpendicular T to the surface of the sensor 7 depends both on the distance d between the portion of the building 9 which is to be monitored and the surface of the sensor 7 and on the lateral extension of the portion of the building irradiated D in accordance with the following equation:

$$\beta_{max} = artan(D/2d) \approx D/2d. \qquad\qquad [6]$$

The latter equality is valid in small angle conditions. The equation [6] is valid in the case where the dimension D is much greater than the surface of the sensor 7.

The equations [5] and [6] therefore allow calculation of the maximum angle $\theta$ between the reference beam R and the perpendicular T to the surface of the sensor 7:

$$\theta_{max} = \alpha_{max} - \beta_{max} = \lambda/(2d_p) - D/2d \qquad\qquad [7]$$

Given a certain distance d it is however possible to reduce the angle $\theta$ in order to increase the dimension D of the portion explored, as can be seen in Figure 3b (since $\alpha_{max}$ is fixed by the sampling theorem, reducing $\theta$ allows $\beta_{max}$, namely D, to be increased). In order to keep the diffraction orders in the hologram separate, however, $\theta$ must remain greater than D/2d. By inserting this value in the equation [7], the maximum dimension $D_{max}$ of the portion of the building 9 targeted, namely the maximum visual field, is obtained:

$$D_{max} = \lambda d/(2d_p). \hspace{4cm} [8]$$

From the equation [8] it is clear that $D_{max}$ is proportional to $\lambda$ and to the distance d, while it is inversely proportional to the pixel size dp. Considering that the wavelengths in the middle infrared range are about 20 times greater than the wavelengths in the visible spectrum (10 $\mu$m instead of 0.5 $\mu$m) and that the typical pixel size in an infrared sensor is typically 5 times greater than that of a sensor in the visible spectrum (25 $\mu$m instead of 5 $\mu$m), given a certain distance, the use of infrared radiation allows monitoring of objects having dimensions four times greater than those which can be monitored with visible radiation.

For example, with digital holography having a visible wavelength for example of 532 nm at a distance of d=30 m using a pixel size $d_P$=5 $\mu$m, it would be possible to monitor objects with a maximum dimension of about 1.6 m. By using a wavelength in the middle infrared range (namely of about 10 microns) at the same monitoring distance and with a pixel size of $d_P$=25 $\mu$m it would be possible to increase instead the maximum dimension of the object to about 6 metres.

As regards the amplitude of minimum deformations and displacements which can be detected, the inventors have estimated that, by optimizing the visibility of the fringes and the noise signal ratio, the minimum displacement of each pixel-point which can be detected by the system 1 is substantially equal to one hundredth of the wavelength. Using wavelengths in the middle infrared range (for example 10.6 $\mu$m), the minimum displacement which can be detected is therefore of the order of one tenth of a $\mu$m. As regards instead the maximum frequency of periodic deformations or displacements which can be detected, it is mainly limited by the sampling theorem and depends essentially on the acquisition frequency of the sensor 7. For example, in the case where the sensor 7 has an acquisition frequency of 25 photograms/s, the maximum frequency of periodic deformations or oscillations which can be detected is about 10 Hz. There is instead no bottom limit of the frequency, such that the system 1 is able to detect periodic deformations or displacements having a frequency which is arbitrarily low and also deformations and displacements which are not periodic.

The inventors carried out a comparative test of the system 1 in real conditions. In particular, the inventors used a monitoring system similar to the system 1 to monitor the oscillations (periodic displacements) of a building with a height of about 20 m having an approximately flat and vertical surface. The system 1 was placed at a distance d of about 18 metres from the building and was adjusted so that the direction of the object beam O was about 38 degrees relative to the ground and contained in the plane perpendicular to the surface of the building. The object beam O thus illuminated a portion of the building with an area of about 4 m$^2$, where a seismometer was also placed for comparative purposes. A sequence of phase images composed of 10 pixels x 10 pixels having an area corresponding to about 100 cm$^2$ of the 4 m$^2$ illuminated was then reconstructed.

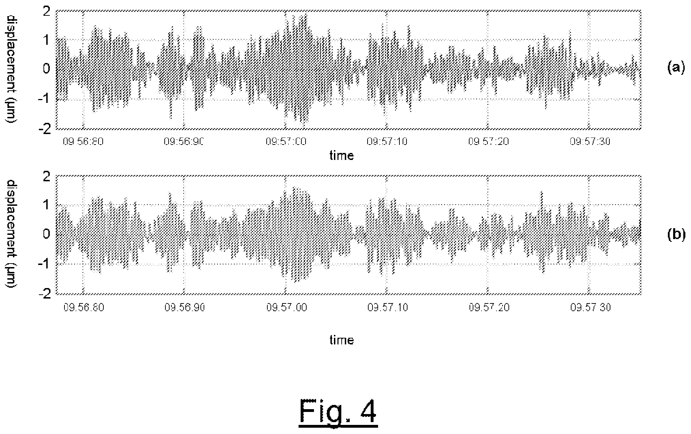

The displacement, with variation in time, of the point of the building where the seismometer was present was then calculated both by the system 1 and by the seismometer. The results are shown in Figure 4.

Figure 4 in particular shows the data obtained by the system 1 using digital holography (graph (a)) and the data obtained by the seismometer (graph (b)). As regards the graph (a), the displacement, with variation in time, was calculated taking into account the factor k of inclination of the object beam O (division by cos (38°)) in accordance with the equation [3]. On the other hand, as regards the graph (b), from among the data supplied by the seismometer, only the data relating to the displacement able to be detected by the system 1, namely the displacement along the perpendicular N to the surface of the building surrounding the measurement point, was considered. From a comparison of the two graphs it is clear that the results provided by the system 1 correspond entirely to those of the seismometer. The system 1 is therefore able to provide results, the accuracy of which is comparable to that of conventional seismometers.

As a result of the monitoring method and system according to the present invention it is therefore possible to monitor building structures, potentially as a whole, remotely, and in real time, without having to arrange any sensor inside or on the external surface of the structures. The monitoring time and costs are therefore reduced significantly compared to the known techniques which use seismometers.

**Claims**

1. A system (1) for monitoring a deformation and/or a displacement of a building structure (9) by means of digital holography, said system (1) comprising:

- a laser source (2) suitable for emitting an infrared radiation;
- an interferometric arrangement configured to divide said infrared radiation into an object beam (O) configured to irradiate at least one portion of said building structure (9) and to be scattered by said at least one portion of said building structure (9), and a reference beam (R) configured to interfere with said object beam (O) scattered by said at least one portion of said structure (9) so as to create a hologram of said at least one portion of said structure (9);
- a sensor (7) configured to detect a time sequence of holograms of said at least one portion of said structure (9); and
- a processing unit (8) configured to reconstruct an evolution in time of said deformation and/or said displacement of said at least one portion of said structure (9) by numerically processing said time sequence of holograms of said at least one portion of said structure (9).

2. The system (1) according to claim 1, wherein said infrared radiation has a wavelength comprised between 3 $\mu$m and 30 $\mu$m.

3. The system (1) according to claim 1 or 2, wherein said interferometric arrangement comprises a first lens (4) suitable for enlarging said object beam (O) before it irradiates said at least one portion of said building structure (9) and a second lens (5) suitable for enlarging said reference beam (R) before it interferes with said object beam (O) scattered by said at least one portion of said building structure (9).

4. The system (1) according to any one of the preceding claims, wherein said interferometric arrangement further comprises a mirror (83) suitable for deflecting said object beam (O) before it illuminates said at least one portion of said building structure (9), said mirror (83) being movable so as to adjust a direction of incidence of said object beam (O) on said portion of said structure (9).

5. The system (1) according to any of the preceding claims, wherein said processing unit (8) is configured to:

   - process said sequence of holograms of said at least one portion of said structure (9) so as to provide a sequence of phase images of said at least one portion of said structure (9); and
   - calculate a displacement over time of at least one point of said at least one portion of said structure (9) represented by a certain pixel in said sequence of phase images of said at least one portion of said structure (9), as a function of phase differences of said pixel between consecutive phase images of said sequence of phase images of said at least one portion of said structure (9).

6. The system (1) according to claim 5, wherein said processing unit (8) is configured to calculate said displacement over time of said at least one point of said at least one portion of said structure (9) along a direction (N) perpendicular to a surface surrounding said at least one point of said at least one portion of said structure (9) and to divide said displacement along said direction (N) by a factor (k) which takes into account the inclination of a direction of incidence of said object beam (O) on said at least one portion of said structure (9) relative to said direction (N).

7. The system (1) according to any of the preceding claims, wherein said processing unit (8) is further configured to process said sequence of holograms of said at least one portion of said structure (9) so as to provide a sequence of amplitude images of said at least one portion of said structure (9).

8. A method for monitoring a deformation and/or a displacement of a building structure (9) by means of digital holography, said method comprising:

   - providing an infrared laser radiation;
   - dividing said infrared laser radiation into an object beam (O) and a reference beam (R), irradiating at least one portion of said building structure (9) by means of said object beam (O) so that said object beam (O) is scattered by said at least one portion of said building structure (9), and making said reference beam (R) interfere with said object beam (O) scattered by said at least one portion of said building structure (9) so as to create at least one hologram of said at least one portion of said structure (9);
   - detecting a time sequence of holograms of said at least one portion of said structure (9); and
   - reconstructing an evolution in time of said deformation and/or said displacement of said at least one portion of said structure (9) by numerically processing said time sequence of holograms of said at least one portion of said structure (9).

**EP 3 250 964 B1**

**Patentansprüche**

1. System (1) zum Überwachen einer Deformation und/oder einer Verschiebung einer Gebäudestruktur (9) durch Mittel einer digitalen Holographie, wobei das System (1) aufweist:

   - eine Laserquelle (2), die geeignet ist Infrarot-Strahlung auszusenden;
   - eine interferometrische Anordnung, die konfiguriert ist, die Infrarot-Strahlung in einen Objektstrahl (O), der konfiguriert ist, dass er mindestens einen Teil der Gebäudestruktur (9) bestrahlt und um von mindestens einem Teil der Gebäudestruktur (9) gestreut zu werden und einem Referenzstrahl (R) zu teilen, der konfiguriert ist, um mit dem Objektstrahl (O), der von dem mindestens einen Teil der Gebäudestruktur (9) gestreut wird, zu interferieren, um ein Hologramm zumindest eines Teils der Struktur (9) zu erzeugen;
   - einen Sensor (7), der konfiguriert ist, um eine zeitliche Sequenz von Hologrammen des mindestens einen Teils der Struktur (9) zu detektieren; und
   - eine Verarbeitungseinheit (8), die konfiguriert ist, um eine zeitliche Entwicklung der Deformation und/oder der Verschiebung des mindestens einen Teils der Struktur (9) durch numerische Verarbeitung der Zeitsequenz der Hologramme des mindestens einen Teils der Struktur (9) zu rekonstruieren.

2. System (1) nach Anspruch 1, wobei die Infrarot-Strahlung eine Wellenlänge zwischen 3 $\mu$m und 30 $\mu$m aufweist.

3. System (1) nach Anspruch 1 oder 2, wobei die interferometrische Anordnung eine erste Linse (4), welche zum Vergrößern des Objektstrahles (O) bevor er den mindestens einen Teil der Gebäudestruktur (9) bestrahlt geeignet ist und eine zweite Linse (5) aufweist, die zum Vergrößern des Referenzstrahls (R) bevor er mit dem Objektstrahl (O) der von mindestens einem Teil der Gebäudestruktur (9) gestreut ist, interferiert, geeignet ist.

4. System (1) nach einem der vorangehenden Ansprüche, wobei die interferometrische Anordnung des Weiteren einen Spiegel (83) aufweist, der zum Ablenken des Objektstrahls (O) bevor er den mindestens einen Teil der Gebäudestruktur (9) bestrahlt geeignet ist, wobei der Spiegel (83) beweglich ist, um eine Einfallsrichtung des Objektstrahls (O) auf den Teil der Struktur (9) einzustellen.

5. System (1) nach einem der vorangehenden Ansprüche, wobei die Verarbeitungseinheit (8) konfiguriert ist um:

   - die Sequenz von Hologrammen des mindestens einen Teils der Struktur (9) zu verarbeiten, um eine Sequenz von Phasenbildern des mindestens einen Teils der Struktur (9) bereitzustellen; und
   - eine Verschiebung über die Zeit von mindestens einem Punkt des mindestens einen Teils der Struktur (9), repräsentiert durch ein bestimmtes Pixel in der Sequenz von Phasenbildern des mindestens einen Teils der Struktur (9) zu berechnen, als Funktion von Phasenunterschieden des Pixels zwischen aufeinander folgenden Phasenbildern der Sequenz von Phasenbildern des mindestens einen Teils der Struktur (9).

6. System (1) nach Anspruch 5, wobei die Verarbeitungseinheit (8) konfiguriert ist, um die Verschiebung über die Zeit des mindestens einen Punktes des mindestens einen Teils der Struktur (9) entlang einer Richtung (N) senkrecht zu einer Oberfläche, welche den mindestens einen Punkt des mindestens einen Teils der Struktur (9) umgibt, zu berechnen und um die Verschiebung entlang der Richtung (N) durch einen Faktor (k) zu dividieren, welcher die Neigung der Einfallsrichtung des Objektstrahls (O) auf den mindestens einen Teil der Struktur (9) relativ zu der Richtung (N) berücksichtigt.

7. System (1) nach einem der vorangehenden Ansprüche, wobei die Verarbeitungseinheit (8) des Weiteren konfiguriert ist, die Sequenz von Hologrammen des mindestens einen Teils der Struktur (9) zu verarbeiten, um eine Sequenz von Amplitudenbildern des mindestens einen Teils der Struktur (9) bereitzustellen.

8. Verfahren zum Überwachen einer Deformation und/oder einer Verschiebung einer Gebäudestruktur (9) durch Mittel von digitaler Holographie, wobei das Verfahren aufweist:

   - Bereitstellen einer Infrarot-Laserstrahlung;
   - Aufteilen der Infrarot-Laserstrahlung in einen Objektstrahl (O) und einen Referenzstrahl (R), bestrahlend mindestens eines Teils der Gebäudestruktur (9) mittels des Objektstrahls (O), so dass der Objektstrahl (O) durch den mindestens einen Teil der Gebäudestruktur (9) gestreut wird und Interferieren lassen des Referenzstrahls (R) mit dem durch den mindestens einen Teil der Gebäudestruktur (9) gestreuten Objektstrahl (O), um mindestens ein Hologramm des mindestens einen Teils der Struktur (9) zu erzeugen;

- Detektieren einer Sequenz von Hologrammen des mindestens eine Teils der Struktur (9); und
- Rekonstruieren einer zeitlichen Entwicklung der Deformation und/oder der Verschiebung des mindestens einen Teils der Struktur (9) durch numerisches Verarbeiten der Zeitsequenz von Hologrammen des mindestens einen Teils der Struktur (9).

**Revendications**

1. Système (1) de surveillance d'une déformation et/ou d'un déplacement d'une structure de bâtiment (9) au moyen d'une holographie numérique, ledit système (1) comprenant :

   - une source laser (2) adaptée pour émettre un rayonnement infrarouge ;
   - un agencement interférométrique configuré pour diviser ledit rayonnement infrarouge en un faisceau d'objet (O) configuré pour rayonner au moins une partie de ladite structure de bâtiment (9) et pour être diffusé par ladite au moins une partie de ladite structure de bâtiment (9), et un faisceau de référence (R) configuré pour interférer avec ledit faisceau d'objet (O) diffusé par ladite au moins une partie de ladite structure (9) de sorte à créer un hologramme de ladite au moins une partie de ladite structure (9) ;
   - un capteur (7) configuré pour détecter une séquence temporelle d'hologrammes de ladite au moins une partie de ladite structure (9) ; et
   - une unité de traitement (8) configurée pour reconstruire une évolution dans le temps de ladite déformation et/ou dudit déplacement de ladite au moins une partie de ladite structure (9) par traitement numérique de ladite séquence temporelle d'hologrammes de ladite au moins une partie de ladite structure (9).

2. Système (1) selon la revendication 1, dans lequel ledit rayonnement infrarouge a une longueur d'onde comprise entre 3 $\mu$m et 30 $\mu$m.

3. Système (1) selon la revendication 1 ou 2, dans lequel ledit agencement interférométrique comprend une première lentille (4) adaptée pour agrandir ledit faisceau d'objet (O) avant qu'il rayonne ladite au moins une partie de ladite structure de bâtiment (9) et une seconde lentille (5) adaptée pour agrandir ledit faisceau de référence (R) avant qu'il interfère avec ledit faisceau d'objet (O) diffusé par ladite au moins une partie de ladite structure de bâtiment (9).

4. Système (1) selon l'une quelconque des revendications précédentes, dans lequel ledit agencement interférométrique comprend en outre un miroir (83) adapté pour dévier ledit faisceau d'objet (O) avant qu'il éclaire ladite au moins une partie de ladite structure de bâtiment (9), ledit miroir (83) étant mobile de sorte à ajuster une direction d'incidence dudit faisceau d'objet (O) sur ladite partie de ladite structure (9).

5. Système (1) selon l'une quelconque des revendications précédentes, dans lequel ladite unité de traitement (8) est configurée pour :

   - traiter ladite séquence d'hologrammes de ladite au moins une partie de ladite structure (9) de sorte à fournir une séquence d'images de phase de ladite au moins une partie de ladite structure (9) ; et
   - calculer un déplacement avec le temps d'au moins un point de ladite au moins une partie de ladite structure (9) représenté par un certain pixel dans ladite séquence d'images de phase de ladite au moins une partie de ladite structure (9), en fonction de différences de phase dudit pixel entre des images de phase consécutives de ladite séquence d'images de phase de ladite au moins une partie de ladite structure (9).

6. Système (1) selon la revendication 5, dans lequel ladite unité de traitement (8) est configurée pour calculer ledit déplacement avec le temps dudit au moins un point de ladite au moins une partie de ladite structure (9) le long d'une direction (N) perpendiculaire à une surface entourant ledit au moins un point de ladite au moins une partie de ladite structure (9) et pour diviser ledit déplacement le long de ladite direction (N) par un facteur (k) qui prend en compte l'inclinaison d'une direction d'incidence dudit faisceau d'objet (O) sur ladite au moins une partie de ladite structure (9) par rapport à ladite direction (N).

7. Système (1) selon l'une quelconque des revendications précédentes, dans lequel ladite unité de traitement (8) est en outre configurée pour traiter ladite séquence d'hologrammes de ladite au moins une partie de ladite structure (9) de sorte à fournir une séquence d'images d'amplitude de ladite au moins une partie de ladite structure (9).

8. Procédé de surveillance d'une déformation et/ou d'un déplacement d'une structure de bâtiment (9) au moyen d'une holographie numérique, ledit procédé comprenant :

- la fourniture d'un rayonnement laser infrarouge ;
- la division dudit rayonnement laser infrarouge en un faisceau d'objet (O) et un faisceau de référence (R), le rayonnement d'au moins une partie de ladite structure de bâtiment (9) au moyen dudit faisceau d'objet (O) de sorte que ledit faisceau d'objet (O) est diffusé par ladite au moins une partie de ladite structure de bâtiment (9), et le fait de faire interférer ledit faisceau de référence (R) avec ledit faisceau d'objet (O) diffusé par ladite au moins une partie de ladite structure de bâtiment (9) de sorte à créer au moins un hologramme de ladite au moins une partie de ladite structure (9) ;
- la détection d'une séquence temporelle d'hologrammes de ladite au moins une partie de ladite structure (9) ; et
- la reconstruction d'une évolution dans le temps de ladite déformation et/ou dudit déplacement de ladite au moins une partie de ladite structure (9) par traitement numérique de ladite séquence temporelle d'hologrammes de ladite au moins une partie de ladite structure (9).

Fig. 1

## Fig. 1a

```
                    ┌──────────┐
                    │  start   │
                    └──────────┘
                         │
                         ▼
              ┌──────────────────────┐
              │     acquisition of   │      30
              │   hologram sequence  │
              └──────────────────────┘
       ┌ ─ ─ ─ ─ ─ ─ ─ ─ ─ ─ ─ ─ ─ ─ ─ ┐
       │       ┌──────────────────┐
       │       │     filtering    │      310      │
       │       └──────────────────┘
       │                │                         │
       │                ▼
       │       ┌──────────────────┐               │
       │       │   zero padding   │      311          31
       │       └──────────────────┘               │
       │                │
       │                ▼                          │
       │       ┌──────────────────┐
       │       │  reconstruction of │    312       │
       │       │ building phase image│
       │       └──────────────────┘               │
       └ ─ ─ ─ ─ ─ ─ ─ ─ ─ ─ ─ ─ ─ ─ ─ ┘
                         │
                         ▼
              ┌──────────────────────┐
              │ reconstruction of evolution │   32
              │  in time of displacement │
              └──────────────────────┘
                         │
                         ▼
                    ┌──────────┐
                    │   end    │
                    └──────────┘
```

# Fig. 2

Fig. 3a

Fig. 3b

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002135751 A

- EP 1654596 A

**Non-patent literature cited in the description**

- **A. PELAGOTTI et al.** Reliability of 3D Imaging by Digital Holography at Long IR Wavelength. *Journal of Display Technology,* October 2010, vol. 6 (10), 465-471